(19)

Europäisches
Patentamt
European
Patent Office
Office européen
des brevets

(11)  **EP 1 958 347 B1**

(12)  **EUROPEAN PATENT SPECIFICATION**

(45) Date of publication and mention
of the grant of the patent:
**25.03.2015 Bulletin 2015/13**

(21) Application number: **06824606.5**

(22) Date of filing: **05.12.2006**

(51) Int Cl.:
**H04B 7/04** *(2006.01)*      **H04B 7/06** *(2006.01)*

(86) International application number:
**PCT/SE2006/050539**

(87) International publication number:
**WO 2007/067137 (14.06.2007 Gazette 2007/24)**

(54) **MULTIPLE STREAM CO-PHASING FOR MULTIPLE-INPUT-MULTIPLE-OUTPUT (MIMO) SYSTEMS**

MEHRFACH-STROM-CO-PHASING FÜR SYSTEME MIT MEHREREN EINGÄNGEN UND MEHREREN AUSGÄNGEN (MIMO)

COPHASAGE DE TRAINS MULTIPLES POUR SYSTEMES MIMO (ENTREE MULTIPLE-SORTIE MULTIPLE)

(84) Designated Contracting States:
**AT BE BG CH CY CZ DE DK EE ES FI FR GB GR HU IE IS IT LI LT LU LV MC NL PL PT RO SE SI SK TR**

(30) Priority:  **07.12.2005  US 275068**

(43) Date of publication of application:
**20.08.2008  Bulletin 2008/34**

(73) Proprietor: **Telefonaktiebolaget LM Ericsson (publ)**
**164 83 Stockholm (SE)**

(72) Inventor: **HAFEEZ, Abdulrauf**
**Cary, North Carolina 27519 (US)**

(74) Representative: **Kühn, Friedrich Heinrich**
**Ericsson AB**
**Patent Unit LTE**
**Torshamnsgatan 23**
**164 80 Stockholm (SE)**

(56) References cited:
**EP-A1- 1 359 683**      **US-A1- 2003 185 309**
**US-A1- 2004 196 919**      **US-A1- 2005 025 271**

- **GOROKHOV A. ET AL.: 'Transmit/receive MIMO antenna subset selection' ACOUSTICS, SPEECH, AND SIGNAL PROCESSING, 2004. PROCEEDINGS. (ICASSP '04). IEEE INTERNATIONAL CONFERENCE vol. 2, 17 May 2004 - 21 May 2004, pages II-13 - II-16, XP010717825**
- **MOLISCH A.F. ET AL.: 'MIMO systems with antenna selection' MICROWAVE MAGAZINE, IEEE vol. 5, March 2004, pages 46 - 56, XP011110924**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD OF THE INVENTION**

The present invention relates to radio communication systems. More particularly, and not by way of limitation, the present invention is directed to an apparatus and method for transmitting independent data streams from a plurality of radio antennas.

**BACKGROUND**

The capacity of a wireless channel can be enhanced greatly by utilizing multiple transmit and multiple receive antennas. This has been demonstrated by open-loop multiple-input-multiple-output (MIMO) schemes, such as the Bell Labs Layered Space-Time (BLAST) architecture. Open-loop MIMO schemes do not require any feedback link from the receiver to the transmitter, as in closed-loop MIMO schemes. However, by exploiting instantaneous channel-state information provided to the transmitter by the receiver as in closed-loop MIMO schemes, the channel capacity is further enhanced. Closed-loop MIMO schemes include Eigenmode-BLAST, which is an optimum closed-loop MIMO scheme, and Per Antenna Rate Control (PARC), which achieves the open-loop MIMO capacity. In PARC, an independently coded and modulated data stream is transmitted from each transmit antenna. The coding rate for each data stream is provided by the receiver via a feedback mechanism.

While optimum closed-loop MIMO schemes require a large amount of instantaneous channel information to be fed back from the receiver to the transmitter, PARC requires much less feedback. However, PARC does not perform well in certain conditions, such as low signal-to-noise ratio (SNR) conditions, systems with correlated antennas, systems with fewer receive antennas than transmit antennas, and channels with Ricean fading. In such conditions, the MIMO channel often cannot support the transmission of as many data streams as the number of transmit antennas (as done in PARC). This limits the capacity of PARC. This problem was partly solved by Selective-PARC (S-PARC), which is an extension of PARC. S-PARC transmits as many data streams as can be supported by the channel by using the same number of transmit antennas as there are data streams. S-PARC performs better than PARC in the above-mentioned conditions. However, since S-PARC may not utilize all transmit antennas, its capacity is significantly lower than optimum closed-loop MIMO.

Thus, what is needed in the art is a closed-loop MIMO scheme that overcomes the deficiencies of conventional systems and methods by utilizing all transmit antennas to transmit an adaptive number of data streams. The present invention provides such a system and method.

EP1359683, for instance, relates to wireless communication using multi-transmit multi-receive antenna arrays, and is set out to offer a substantial improvement in the compromise between diversity gain and spectral efficiency.

**SUMMARY OF THE INVENTION**

The present invention is a system and method for implementing in a radio communication system, a closed-loop MIMO scheme that utilizes, in one embodiment, all transmit antennas to transmit an adaptive number of data streams. This is done by partitioning the set of transmit antennas into mutually exclusive subsets to transmit independent data streams after "co-phasing". The term "co-phasing" refers to a procedure in which relative phase rotations are applied to a data stream transmitted from multiple antennas. The concept of co-phasing is similar to beamforming, except that co-phasing is performed based on instantaneous channel-state information fed back to the transmitter by the receiver. The relative phase rotations (co-phasing angles) are designed to maximize the received signal power, which approximately maximizes channel capacity. An iterative algorithm may be used for finding the co-phasing angles. The scheme, referred to herein as "Multiple Stream Co-phasing" (MSC), requires similar complexity and feedback as S-PARC. However, MSC significantly outperforms S-PARC and achieves close to the capacity of optimum closed-loop MIMO for many channels of interest.

Thus, in one aspect, the present invention is directed to a method of transmitting multiple independent data streams from subsets of a plurality of transmit antennas. The method includes determining by the receiver, a partitioning of the plurality of transmit antennas that provides the highest channel capacity among all possible partitionings, and providing information regarding the determined partitioning to the transmitter. The transmitter partitions the plurality of transmit antennas into mutually exclusive subsets in accordance with the determined partitioning information, applies a relative phase rotation to each antenna, and transmits an independent data stream from each partitioned subset of antennas.

In another aspect, the present invention is directed to a method of transmitting a data stream from a selected subset of a plurality of transmit antennas. The method includes partitioning by the receiver, the plurality of transmit antennas into a plurality of subsets; and calculating by the receiver for each subset, a relative phase rotation to be applied to each transmit antenna in the subset, and a stream capacity for the subset with the relative phase rotations applied. The receiver then selects a subset having the highest stream capacity and sends information to the transmitter regarding the selected subset. The transmitter then transmits the data stream from the selected subset of transmit antennas after applying the relative phase rotations to the transmit antennas in the selected subset.

In yet another aspect, the present invention is directed to a radio system for transmitting multiple independent data streams from subsets of a plurality of transmit antennas. A receiver includes means for determining a partitioning of the plurality of transmit antennas that provides the highest channel capacity among all possible partitionings, and means for sending information regarding the determined antenna partitioning to a transmitter. The transmitter includes means for partitioning the plurality of transmit antennas into mutually exclusive subsets in accordance with the determined partitioning information; means for applying a relative phase rotation to each transmit antenna; and means for transmitting an independent data stream from each partitioned subset of transmit antennas.

In still yet another aspect, the present invention is directed to a radio system for transmitting a data stream from a selected subset of a plurality of transmit antennas. The system includes a receiver having means for partitioning the plurality of transmit antennas into a plurality of subsets; and means for calculating for each subset, a relative phase rotation to be applied to each transmit antenna in the subset, and a stream capacity for the subset with the relative phase rotations applied. The receiver also selects a subset having the highest stream capacity, and sends information to the transmitter regarding the selected subset. The system also includes a transmitter comprising means for transmitting the data stream from the selected subset of transmit antennas after applying the co-phasing angles to the transmit antennas in the selected subset.

## BRIEF DESCRIPTION OF THE DRAWINGS

In the following section, the invention will be described with reference to exemplary embodiments illustrated in the figures, in which:

In the following section, the invention will be described with reference to exemplary embodiments illustrated in the figures, in which:

FIG. 1 is a flowchart illustrating the steps of an exemplary overall multi-stream co-phasing process performed by a transmitter and receiver in accordance with the teachings of the present invention;
FIG. 2 is a flowchart illustrating the steps of an exemplary process for computing channel-state feedback information by the receiver in accordance with the teachings of the present invention;
FIG. 2B is a flowchart illustrating the steps of an alternative exemplary process for computing channel-state feedback information by the receiver in accordance with the teachings of the present invention;
FIG. 3 is a flowchart illustrating the steps of an exemplary process for utilizing channel-state feedback information by the transmitter to maximize transmission capacity in accordance with the teachings of the present invention;
FIG. 4 is a simplified block diagram of an embodiment of the transmitter of the present invention;
FIG. 5 is a simplified block diagram of an embodiment of the receiver of the present invention; and
FIG. 6 is a simplified block diagram of an embodiment of the system of the present invention.

## DETAILED DESCRIPTION

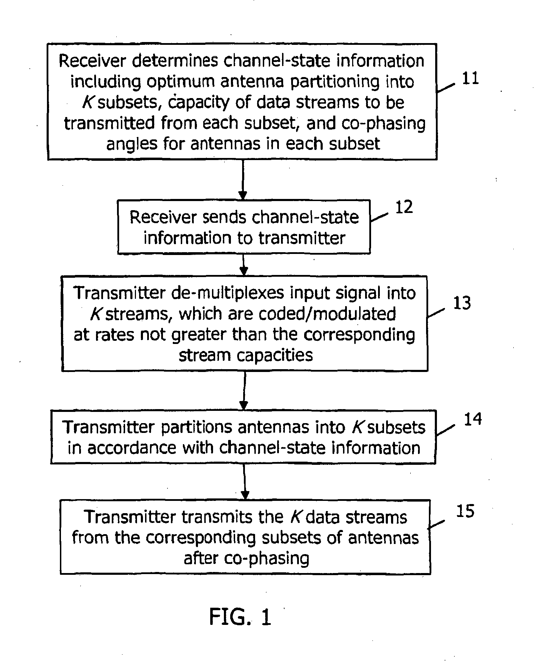

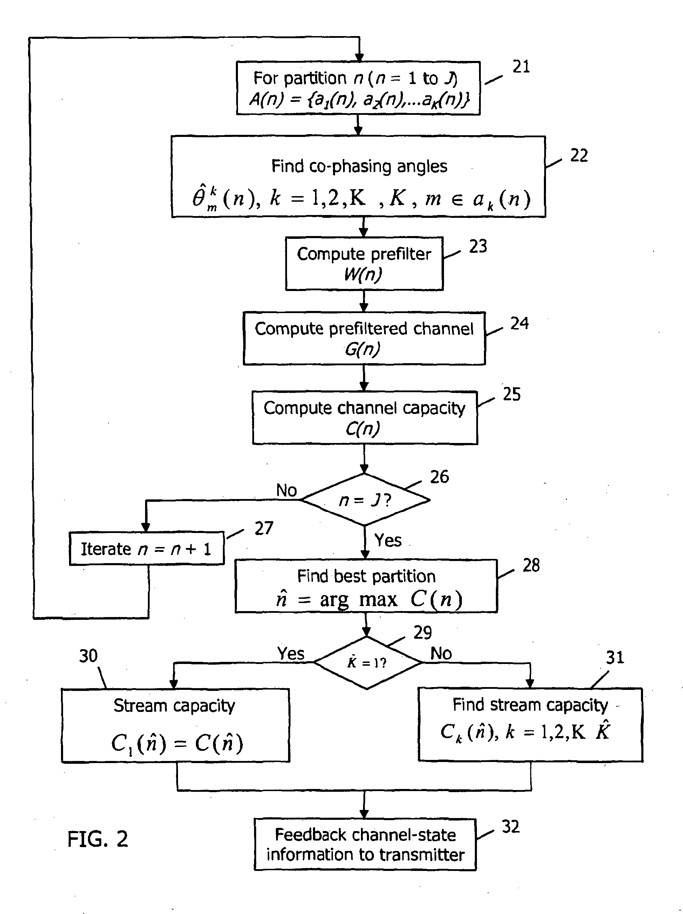

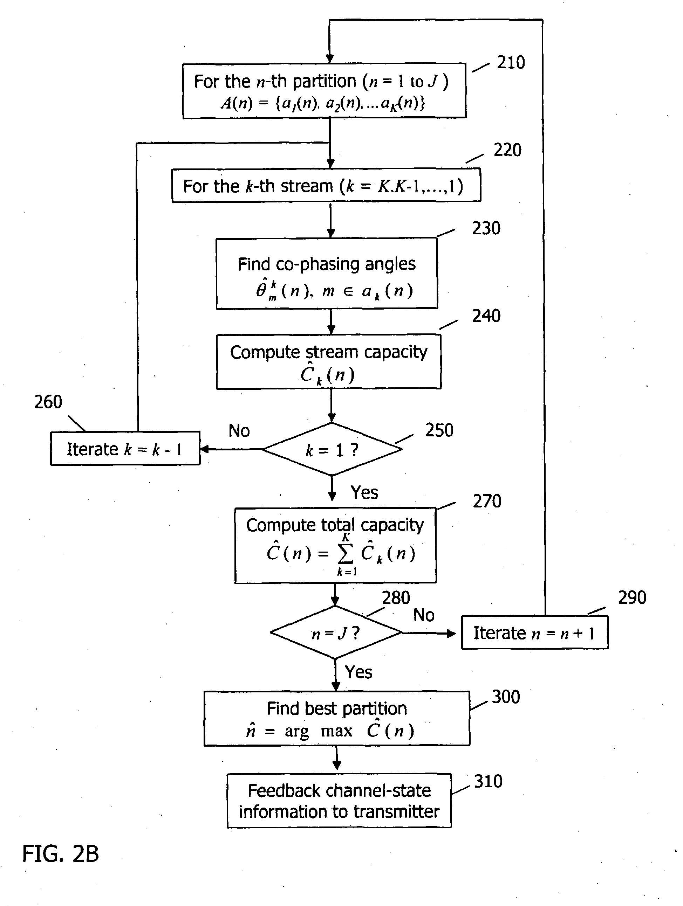

FIG. 1 is a flowchart illustrating the steps of an exemplary overall multi-stream co-phasing process performed by a transmitter and receiver in accordance with the teachings of the present invention. At step 11, the receiver determines channel-state information in a process shown in more detail in FIG. 2 and 2B. In a preferred embodiment, the channel-state information includes an optimum antenna partitioning into K subsets, co-phasing angles for each antenna, and stream capacity (i.e., rate) information for the optimum antenna partitioning. At step 12, the receiver sends the channel-state information to the transmitter. At step 13, the transmitter de-multiplexes an input signal into K independent streams based on the antenna-partitioning information received from the receiver. Each stream may be coded and modulated at a rate which is not greater than the stream capacity. Each stream may also be scaled. At step 14, the transmitter partitions the antennas into K subsets and applies the co-phasing angles to each antenna in accordance with the channel-state information. At step 15, the transmitter transmits the K data streams from the K subsets of antennas.

Thus, based on instantaneous channel-state information received over a feedback channel from the receiver, the transmitter divides an input data signal into K separate streams and sends parallel sequences of data symbols (streams) to multiple antennas. Different phase rotations applied to each antenna eliminate mutual interference. By transmitting K streams in parallel, the transmission time required to send K symbols is reduced to one channel use. The total transmission rate is the sum of all of the separate stream rates.

FIG. 2 is a flowchart illustrating the steps of an exemplary process for computing channel-state feedback information by the receiver in accordance with the teachings of the present invention: The receiver analyzes each possible partition and determines a partition that provides the highest channel capacity (i.e., total transmission rate) among all possible partitionings. If the transmitter does not support all possible partitions, the receiver may analyze only those partitions that are supported by the transmitter. Each partition identifies the number of antenna subsets, which antennas are in each subset, the capacity of the data stream to be transmitted from each antenna subset, and what co-phasing angles are to be applied to the antennas in each subset.

The process begins at step 21 with the first partition n out of J partitions to be analyzed. Given the number of transmit and receive antennas, the receiver determines all possible (or desirable) transmit antenna set partitions. The receiver also knows (or estimates) the channel response matrix H and the noise variance $N_0$. At step 22, the co-phasing angles $\theta_m^k(n)$ are determined using equation (9) and an iterative technique described below. At step 23, a prefilter weight matrix $W(n)$ is computed using equation (4). At step 24, a prefiltered channel $G(n)$ is computed as the product of $W(n)$ and a channel impulse response matrix H using equation (5). At step 25, the channel capacity C(n) for the first partition is evaluated using equation (6). At step 26, the process determines whether all J partitions have been analyzed. If not, the process iterates n = n+1 at step 27, and returns to step 21 to analyze the next possible partition. If all of the J partitions have been analyzed, the process moves to step 28, where the receiver selects the partition that maximizes capacity (e.g., $\hat{n}$). At step 29, it is determined whether $\hat{k}$ is equal to one, where $\hat{k}$ is the number of input streams corresponding to the selected partition. If $\hat{K}=1$. the process moves to step 30 and determines the stream capacity. If $\hat{K}>1$, the method moves to step 31 where the stream capacity for each input stream $k = 1,2,K,\hat{K}$ is obtained using equation (12). At step 32, the receiver sends predefined channel-state information to the transmitter.

FIG. 2B is a flowchart illustrating the steps of an alternative exemplary process for computing channel-state feedback information by the receiver in accordance with the teachings of the present invention. The receiver analyzes each possible partition and determines a partition that provides the highest channel capacity (i.e., total transmission rate) among all possible partitionings. If the transmitter does not support all possible partitions, the receiver may analyze only those partitions that are supported by the transmitter. Each partition identifies the number of antenna subsets, which antennas are in each subset, the capacity of the data stream to be transmitted from each antenna subset, and what co-phasing angles are to be applied to the antennas in each subset.

The process begins at step 210 with the first partition n out of J partitions to be analyzed. Given the number of transmit and receive antennas, the receiver determines all possible (or desirable) transmit antenna set partitions. The receiver also knows (or estimates) the channel response matrix H and the noise variance $N_0$. At step 220, the receiver begins with the last data stream in the n-th partition. At step 230, the co-phasing angles $\theta_m^k(n)$ are determined using equation (14) and an iterative technique described below. At step 240, the capacity of the $k$-th data stream is estimated using (17). At step 250, the process determines if all data streams have been evaluated. If not, the process iterates $k = k$-1 at step 260. At step 270, the total capacity for the n-th partition is computed using (18). At step 280, the process determines whether all J partitions have been analyzed. If not, the process iterates n = $n+1$ at step 290, and returns to step 210 to analyze the next possible partition. If all of the J partitions have been analyzed, the process moves to step 300, where the receiver selects the partition that maximizes capacity (e.g., $\hat{n}$). At step 310, the receiver sends predefined channel-state information to the transmitter.

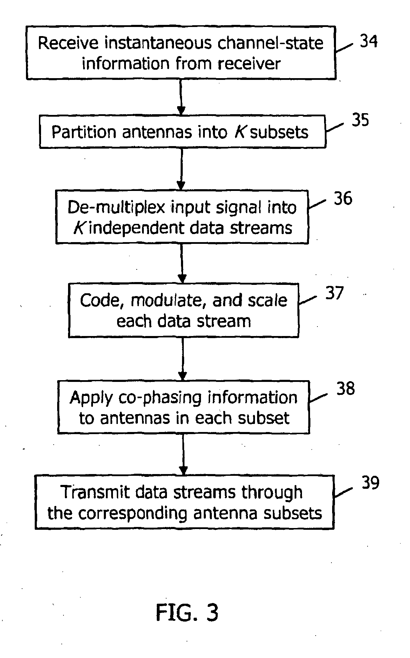

FIG. 3 is a flowchart illustrating the steps of an exemplary process for utilizing channel-state feedback information by the transmitter to maximize transmission capacity in accordance with the teachings of the present invention. At step 34, the transmitter receives the instantaneous channel-state information from the receiver. In one embodiment, the channel-state information includes an optimum antenna partitioning into K subsets, co-phasing angles for each antenna, and stream capacity (i.e., rate) information for the optimum antenna partitioning. At step 35, the transmitter partitions the transmit antennas into K subsets as indicated by the channel-state information. At step 36, an input signal is de-multiplexed into K independent data streams, which are optionally coded, modulated, and scaled at step 37. At step 38, the transmitter applies the co-phasing information to the antennas in each subset, and at step 39, transmits independent data streams in parallel through each antenna subset. The following sections describe in more detail, the processes performed in both the receiver and the transmitter.

Consider a communication system with M transmit antennas and N receive antennas (i.e., an M x N MIMO system). Suppose that the channel is quasi-static and flat fading. The baseband system model can be written as:

$$\underline{y} = H\underline{x} + \underline{w} \qquad (1)$$

where $[x_1,x_2,K,x_M]^T$ is the transmitted signal, $[y_1,y_2,K,y_N]^T$ is the received signal, $H=\{h_{i,j}\}$ is the $N$ x $M$ channel impulse response matrix, and $[w_1,w_2,K,w_N]^T$ is a Gaussian noise vector with mean zero and covariance matrix $N_0 I_N$, where $I_N$ denotes an $N$ x $N$ identity matrix. The total average transmit power is $P_T$.

$$E[\underline{x}^H \underline{x}] = P_T \qquad\qquad (2)$$

The transmitted signal is obtained as:

$$\underline{x} = W\underline{s} \qquad\qquad (3)$$

where $[s_1,s_2,K,s_K]^T$ is the input signal demultiplexed into $K \leq M$ streams which can be independently coded and modulated and $W$ is an $M \times K$ prefilter weight matrix. The following describes a method for determining the prefilter weight matrix. It is assumed that the channel impulse response matrix $H$ and the noise variance $N_0$ are known at the receiver. A person skilled in the art will appreciate that the true values can be replaced by their estimates.

Let $A(n)=\{a_1(n),a_2(n),K,a_K(n)\}$ be the $n$-th partition of the set of transmit antenna indices $\{1,2,K,M\}$. The set $a_K(n)$ contains the indices of the antennas used for the transmission of the $k$-th input stream in the $n$-th partition. The sets contained in a partition are constrained to be mutually exclusive and have at least one element each. The prefilter weight matrix for the n-th antenna set partition is given by:

$$W(n) = \sqrt{\frac{P_T}{K}} \left[ \frac{1}{\sqrt{|a_1(n)|}} \underline{\phi}_1(n) \quad \frac{1}{\sqrt{|a_2(n)|}} \underline{\phi}_2(n) \quad \Lambda \quad \frac{1}{\sqrt{|a_K(n)|}} \underline{\phi}_K(n) \right] \qquad (4)$$

where $\underline{\phi}_K(n)$ is an $M \times 1$ column vector with $|a_K(n)|$ non-zero elements $e^{j\theta_m^k(n)}$ in rows $m \in a_k(n)$ and zero elements in the remaining rows, where $\theta_m^k(n)$ is the co-phasing angle in radians for the $k$-th data stream and the m-th transmit antenna (corresponding to the m-th row and the $k$-th column of the prefilter weight matrix), and $|a|$ refers to the size of the set $a$.

The prefiltered channel is given by:

$$G(n) = HW(n)$$
$$= \sqrt{\frac{P_T}{K}} \left[ \frac{1}{\sqrt{|a_1(n)|}} \sum_{m \in a_1(n)} \underline{h}_m e^{j\theta_m^1(n)} \quad \frac{1}{\sqrt{|a_2(n)|}} \sum_{m \in a_2(n)} \underline{h}_m e^{j\theta_m^2(n)} \quad \Lambda \quad \frac{1}{\sqrt{|a_K(n)|}} \sum_{m \in a_K(n)} \underline{h}_m e^{j\theta_m^K(n)} \right] \qquad (5)$$

The capacity of this scheme is given by:

$$C(n) = \log_2 \det\left( I_N + \frac{1}{N_0} G(n)G^H(n) \right)$$
$$= \log_2 \det\left( I_K + \frac{1}{N_0} G^H(n)G(n) \right) \qquad (6)$$

The co-phasing angles $\theta_m^k(n)$ can be found by maximizing channel capacity. It can be seen that at low SNR, this is equivalent to maximizing the trace of the prefiltered channel autocorrelation matrix $G^H(n)G(n)$, given by:

$$\text{Trace}\left(G^H(n)G(n)\right) = \frac{P_T}{K} \sum_{k=1}^{K} \frac{1}{|a_k(n)|} \left\| \sum_{m \in a_k(n)} \underline{h}_m e^{j\theta_m^k(n)} \right\|^2 \qquad (7)$$

to find the co-phasing angles. The trace metric, which equals the total received signal power, is also a non-linear function of the angles. However, the trace metric decouples in the input streams, which enables the co-phasing angles to be found independently for each data stream. Based on the trace metric, the co-phasing angles for the $k$-th stream can be found by using the partial derivatives:

$$\frac{\partial}{\partial \theta_m^k(n)} \left\| \sum_{l \in a_k(n)} \underline{h}_l e^{j\theta_l^k(n)} \right\|^2 = 0 \tag{8}$$

for each $m \in a_k(n)$.

It can be seen that the optimum co-phasing angles $\hat{\theta}_m^k(n)$ satisfy the equations:

$$\hat{\theta}_m^k(n) = \tan^{-1}\left(\frac{\mathrm{Im}\{\gamma_m^k(n)\}}{\mathrm{Re}\{\gamma_m^k(n)\}}\right) \tag{9}$$

where

$$\gamma_m^k(n) = \underline{h}_m^H \left(\sum_{\substack{l \in a_k(n) \\ l \neq m}} \underline{h}_l e^{j\theta_l^k(n)}\right). \tag{10}$$

Note that for each data stream, the co-phasing angle for one of the transmit antennas can be arbitrarily set to zero (or another value), i.e. $\hat{\theta}_{m'}^k(n) = 0$ for one $m' \in a_k(n)$. Also note that equation (9) is non-linear in the co-phasing angles, except when $|a_k(n)|=2$. In this case, we have $\hat{\theta}_m^k(n) = 0$ and

$$\hat{\theta}_{m'}^k(n) = \tan^{-1}\left(\frac{\mathrm{Im}\{\underline{h}_m^H \cdot \underline{h}_{m'}\}}{\mathrm{Re}\{\underline{h}_m^H \cdot \underline{h}_{m'}\}}\right) \tag{11}$$

for $a_k(n)=\{m',m''\}$. An iterative algorithm can be used to determine the co-phasing angles for $|a_k(n)|>2$. Initially, all co-phasing angles may be set to zero (or some other value). In each iteration, the angles are updated using equation (9) in a parallel or serial fashion. In the parallel case, the angles in the current iteration are determined using the angles in the previous iteration only, while in the serial case, the angles in the current iteration are determined using the angles in the previous iteration and the previously-updated angles in the current iteration.

The receiver performs the process shown above in FIG. 2, and if it is determined at step 29 that $K>1$, the stream capacity for each input stream $k = 1,2,\mathrm{K},K$ is obtained at step 31 as:

$$C_k(\hat{n}) = \log_2\left[1 + \frac{1}{N_0}\underline{g}_k^H(\hat{n})\left(I_N + G_{k,1}(\hat{n})G_{k,1}^H(\hat{n})\right)^{-1}\underline{g}_k(\hat{n})\right] \tag{12}$$

where $\underline{g}_k(\hat{n})$ is the $k$-th column of the matrix $G(\hat{n})$, and $G_k(\hat{n})$ is an $N \times (\hat{K}-k+1)$ matrix given by $G_k(\hat{n})=[\underline{g}_k(n),\underline{g}_{k+1}(n),\mathrm{K},\underline{g}_{\hat{K}}(\hat{n})]$. The selected partition $\hat{n}$ is signaled to the transmitter along with the $\hat{K}$ rates $\{r_1,r_2,\mathrm{K},r_{\hat{K}}\}$, where $r_k$ is the largest rate in bits per symbol less than or equal to $C_k(\hat{n})$ which is supported by the transmitter, and the $M$-$\hat{K}$ co-phasing angles $\{\hat{\theta}_m^k(\hat{n}),\ k = 1,2,\mathrm{K},\hat{K},\ m \in a_k(\hat{n})\}$ (that are not arbitrarily set). The amount of feedback required is thus M real coefficients plus a $\log_2 J$ bit integer, where J is the number of possible (or desirable) partitions. Next we describe an alternative method for finding the co-phasing angles in the present invention. The channel capacity can also be expressed as

$$C(n) = \sum_{k=1}^{K} C_k(n) \tag{13}$$

where $C_k(n)$ is the capacity of the $k$-th data stream (stream capacity), given by

$$C_k(n) = \log_2\left[1 + \frac{1}{N_0} w_k(n)^H H^H \left(I_N + W_{k-1}(n)HH^H W_{k-1}(n)^H\right)^{-1} Hw_k(n)\right] \tag{14}$$

where $w_k(n)$ is the $k$-th column of the matrix $w(n)$, and $w_k(n)$ is an $N\times(K-k+1)$ matrix given by $w_k(n)=[w_k(n),w_{k+1}(n),K,w_K(n)]$.

The co-phasing angles $\theta_m^k(n)$ can be found to maximize the channel capacity. However, since the channel capacity is a complex non-linear function of the angles, the optimization is hard to achieve. Instead, we propose to find the co-phasing angles for a data stream that maximize the stream capacity, given the co-phasing angles of the higher-order streams. The scheme is described below in detail. The co-phasing angles for the K-th data stream are first found by maximizing the capacity of the K-th data stream, given by

$$\begin{aligned}
C_K(n) &= \log_2\left[1 + \frac{1}{N_0} w_K(n)^H H^H Hw_K(n)\right] \\
&= \log_2\left[1 + \frac{P_T}{N_0 K |a_K(n)|} \left\|\sum_{m\in a_K(n)} \underline{h}_m e^{j\theta_m^K(n)}\right\|^2\right]
\end{aligned} \tag{15}$$

This is equivalent to maximizing the received signal gain for the K-th data stream, given by

$$g_K(n) = \left\|\sum_{m\in a_K(n)} \underline{h}_m e^{j\theta_m^K(n)}\right\|^2 . \tag{16}$$

Before we describe how the angles are actually computed for the K-th data stream, let us consider the metric that has to be maximized in order to compute the angles for the other data streams. Suppose that the co-phasing angles for the $k+1,k+2,...,K$ data streams have been estimated and are given by $\hat{\theta}_m^{k+1}(n)$, $\hat{\theta}_m^{k+2}(n)$ ..., $\hat{\theta}_m^K(n)$, respectively. Given these estimates, the angles for the $k$-th data stream can be found by maximizing the corresponding stream capacity, which is equivalent to maximizing the whitened received signal gain, given by

$$\hat{g}_k(n) = \left\|\sum_{m\in a_k(n)} \widetilde{\underline{h}}_m e^{j\theta_m^k(n)}\right\|^2 \tag{17}$$

where $\widetilde{\underline{h}}_m$ is the m-th column of the matrix

$$\left(I_N + \hat{W}_{k-1}(n)HH^H \hat{W}_{k-1}(n)^H\right)^{-1/2} H \tag{18}$$

where $\hat{W}_{k+1}(n)$ is the matrix $W_{k+1}(n)$ with the angles $\theta_m^{k+1}(n)$, $\theta_m^{k+2}(n)$ ..., $\theta_m^K(n)$ replaced by their corresponding estimates $\hat{\theta}_m^{k+1}(n)$ $\hat{\theta}_m^{k+2}(n)$ ..., $\hat{\theta}_m^K(n)$. In order to include the case of the K-th data stream, we let $\hat{W}_{K-1}(n)=0$. In the case of the K-th data stream, the received signal is white and therefore the whitened received signal gain equals the received signal gain.

Next we describe how the co-phasing angles are computed using the above metric. The co-phasing angles for the $k$-th data stream can be found by using the partial derivatives:

$$\frac{\partial}{\partial \theta_m^k(n)} \left\|\sum_{l\in c_k(n)} \widetilde{\underline{h}}_l e^{j\theta_l^k(n)}\right\|^2 = 0 \tag{19}$$

for each $m \in a_k(n)$.

It can be seen that the optimum co-phasing angles $\hat{\theta}_m^k(n)$ satisfy the equations:

$$\hat{\theta}_m^k(n) = \tan^{-1}\left(\frac{\mathrm{Im}\{\tilde{\gamma}_m^k(n)\}}{\mathrm{Re}\{\tilde{\gamma}_m^k(n)\}}\right) \qquad (20)$$

where

$$\tilde{\gamma}_m^k(n) = \underline{\tilde{h}}_m^H\left(\sum_{\substack{l \in a_k(n) \\ l \neq m}} \underline{\tilde{h}}_l e^{j\theta_l^k(n)}\right). \qquad (21)$$

Note that for each data stream $k$, the co-phasing angle for one of the transmit antennas (say $m'$) in the subset $a_k(n)$ can be arbitrarily set to zero (or another value), i.e. $\hat{\theta}_{m'}^k(n) = 0$. Also note that equation (20) is non-linear in the co-phasing angles, except when $|a_k(n)| = 2$. In this case, we have $\hat{\theta}_{m'}^k(n) = 0$ and

$$\hat{\theta}_{m'}^k(n) = \tan^{-1}\left(\frac{\mathrm{Im}\{\underline{\tilde{h}}_{m'}^H \cdot \underline{\tilde{h}}_{m'}\}}{\mathrm{Re}\{\underline{\tilde{h}}_{m'}^H \cdot \underline{\tilde{h}}_{m'}\}}\right) \qquad (22)$$

for $a_k(n) = \{m', m''\}$. An iterative algorithm can be used to determine the co-phasing angles for $|a_k(n)| > 2$ as described earlier.

Using the co-phasing angle estimates, the capacity of the $k$-th data stream is estimated as

$$\hat{C}_k(n) = \log_2\left[1 + \frac{P_T \hat{g}_k(n)}{N_0 K |a_k(n)|}\right]. \qquad (23)$$

The total capacity for the n-th partition is estimated as the sum of all stream capacities

$$\hat{C}(n) = \sum_{k=1}^{K} \hat{C}_k(n). \qquad (24)$$

The partition $\hat{n}$ that maximizes the total capacity is selected by the receiver.

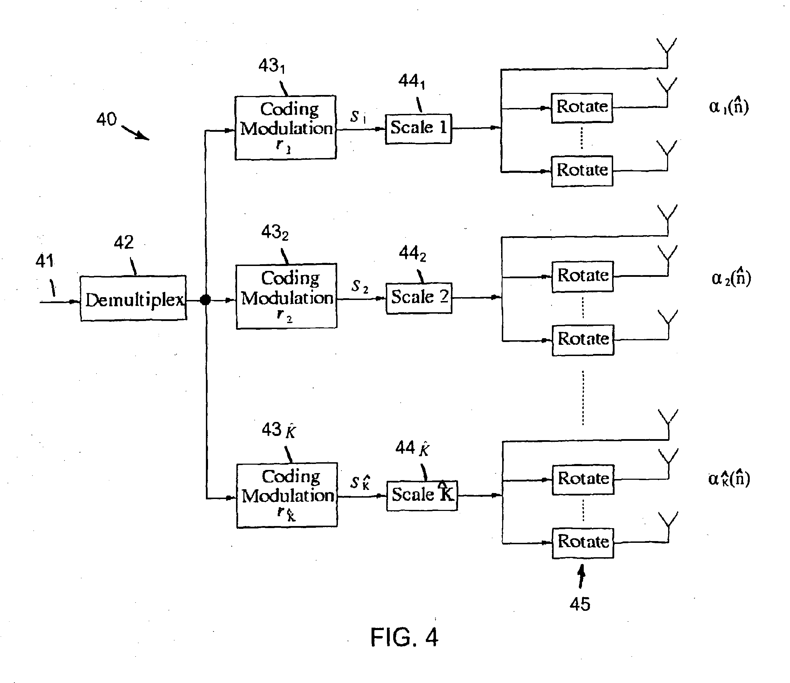

FIG. 4 is a simplified block diagram of an embodiment of the transmitter 40 of the present invention. As shown, an input signal 41 is passed to a demultiplexer 42 where it is demultiplexed into $\hat{K}$ signals, which are independently coded and modulated in encoder/modulators $43_1$-$43_{\hat{K}}$ at rates $\{r_1, r_2, \text{K}, r_{\hat{K}}\}$ to produce $\hat{K}$ streams $\{s_1, s_2, \text{K}, s_{\hat{K}}\}$, respectively. The $\hat{K}$ streams are then scaled by scalers $44_1$-$44_{\hat{K}}$ and independently phase-rotated by phase rotators 45 prior to transmission. The $k$-th stream is scaled by $\sqrt{P_T / \hat{K}|a_k(\hat{n})|}$ and transmitted using the subset $a_k(\hat{n})$ of the transmit antennas after co-phasing (phase rotation) using the angles $\hat{\theta}_m^k(\hat{n}), m \in a_k(\hat{n})$. The antenna set partition, stream rates, and co-phasing angles are provided by the receiver.

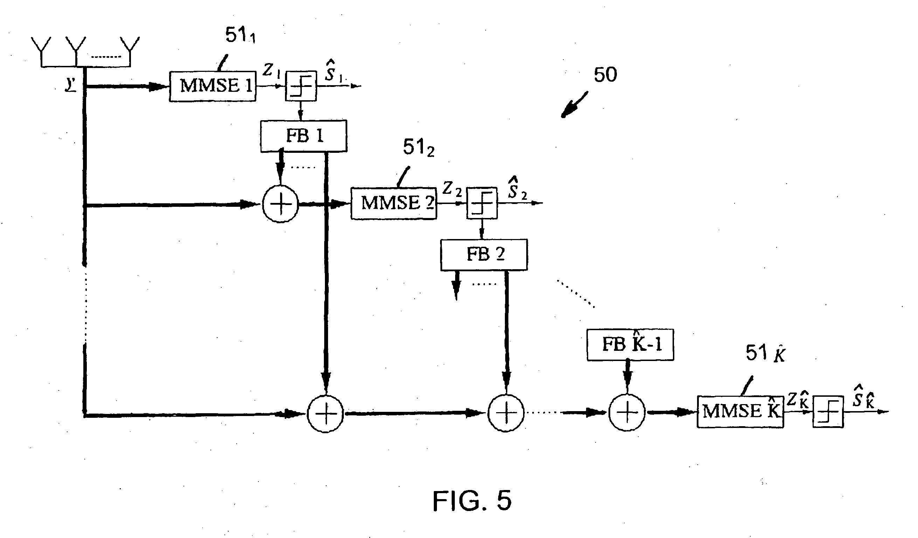

FIG. 5 is a simplified block diagram of an embodiment of the receiver 50 of the present invention. As shown, an input signal y is processed by the receiver utilizing a Minimum Mean Square Error-Decision Feedback Equalizer (MMSE-DFE) successive decoder $51_1$-$51_{\hat{K}}$. Bold lines in FIG. 5 denote vectors, and regular lines denote scalars. The MMSE feedforward filter and the feedback filter for the $k$-th stream (stage) are given by:

$$\underline{f}_k(\hat{n}) = \left( I_N + \frac{1}{N_0} G_{k+1}(\hat{n}) G_{k+1}^H(\hat{n}) \right)^{-1} \underline{g}_k(\hat{n}) \qquad (25)$$

and

$$\underline{b}_k(\hat{n}) = -\underline{g}_k(\hat{n}). \qquad (26)$$

respectively. The input to the $k$-th decoder is:

$$z_k = \underline{f}_k^H(\hat{n}) \left( \underline{y} + \sum_{l=1}^{k-1} \underline{b}_l(\hat{n}) \hat{s}_l \right). \qquad (27)$$

The $k$-th decoder produces an estimate of the $k$-th input stream $\hat{s}_k$.

Example

Consider the example of a 4 x 2 MIMO system. From the theory of MIMO channels, we know that an optimum number of input streams that can be transmitted is less than or equal to min$(M,N)$=2. There are eight possible transmit antenna set partitions in this case: one with single input stream ($K$=1), the rest with two input streams (K=2). The partitions are:

$A(1)$={{1,2,3,4}}, $A(2)$={{1,2,3}, {4}}, $A(3)$={{1,2,4}, {3}}, $A(4)$={{1,3,4}, {2}},
$A(5)$={{2,3,4}, {1}}, $A(6)$={{1,2}, {3,4}}, $A(7)$={{1,3}, {2,4}} and
$A(8)$={{1,4}, {2,3}}.

The prefilter weight matrices corresponding to these antenna set partitions are given below in order.

$$\{W(n), n = 1,2,\mathrm{K}.8\} = \left\{ \sqrt{\frac{P_T}{4}} \begin{bmatrix} 1 \\ e^{j\hat{\theta}_2^1(1)} \\ e^{j\hat{\theta}_3^1(1)} \\ e^{j\hat{\theta}_4^1(1)} \end{bmatrix}, P' \begin{bmatrix} 1 \\ e^{j\hat{\theta}_2^1(2)} \\ e^{j\hat{\theta}_3^1(2)} \\ 0 \end{bmatrix}, P' \begin{bmatrix} 1 \\ e^{j\hat{\theta}_2^1(3)} \\ 0 \\ e^{j\hat{\theta}_3^1(3)} \end{bmatrix}, P' \begin{bmatrix} 1 \\ 0 \\ e^{j\hat{\theta}_3^1(4)} \\ e^{j\hat{\theta}_4^1(4)} \end{bmatrix}, P' \begin{bmatrix} 0 & 1 \\ 1 & 0 \\ e^{j\hat{\theta}_3^1(5)} & 0 \\ e^{j\hat{\theta}_4^1(5)} & 0 \end{bmatrix}, \right.$$
$$\left. \sqrt{\frac{P_T}{4}} \begin{bmatrix} 1 & 0 \\ e^{j\hat{\theta}_2^1(6)} & 0 \\ 0 & 1 \\ 0 & e^{j\hat{\theta}_4^2(6)} \end{bmatrix}, \sqrt{\frac{P_T}{4}} \begin{bmatrix} 1 & 0 \\ 0 & 1 \\ e^{j\hat{\theta}_3^1(7)} & 0 \\ 0 & e^{j\hat{\theta}_4^2(7)} \end{bmatrix}, \sqrt{\frac{P_T}{4}} \begin{bmatrix} 1 & 0 \\ 0 & 1 \\ 0 & e^{j\hat{\theta}_3^2(8)} \\ e^{j\hat{\theta}_4^1(8)} & 0 \end{bmatrix} \right\}, \qquad (28)$$

where

$$P' = \begin{bmatrix} \sqrt{\dfrac{P_T}{6}} & 0 \\ 0 & \sqrt{\dfrac{P_T}{2}} \end{bmatrix}. \qquad (29)$$

An integer with 3 bits can be used to signal the selected partition to the transmitter. The eight possible outcomes of this integer corresponding to the above partitions are $\{r_1, \hat{\theta}_2^1(1), \hat{\theta}_3^1(1), \hat{\theta}_4^1(1)\}$, $\{r_1, \hat{\theta}_2^1(2), \hat{\theta}_3^1(2), r_2\}$, $\{r_1, \hat{\theta}_2^1(3), r_2, \hat{\theta}_4^1(3)\}$, $\{r_1, r_2, \hat{\theta}_3^1(4), \hat{\theta}_4^1(4)\}$, $\{r_2, r_1, \hat{\theta}_3^1(5), \hat{\theta}_4^1(5)\}$, $\{r_1, \hat{\theta}_2^1(6), r_2, \hat{\theta}_4^2(6)\}$, $\{r_1, r_2, \hat{\theta}_3^1(7), \hat{\theta}_4^2(7)\}$ and

$\left\{ r_1, r_2, \hat{\theta}_3^2(8), \hat{\theta}_4^1(8) \right\}$, respectively.

The receiver feeds back the channel state information to the transmitter. In a preferred embodiment of the present invention, the feedback information comprises the partition selection (which can be signaled by means of an integer as described above) and the rates and angles of the selected partition.

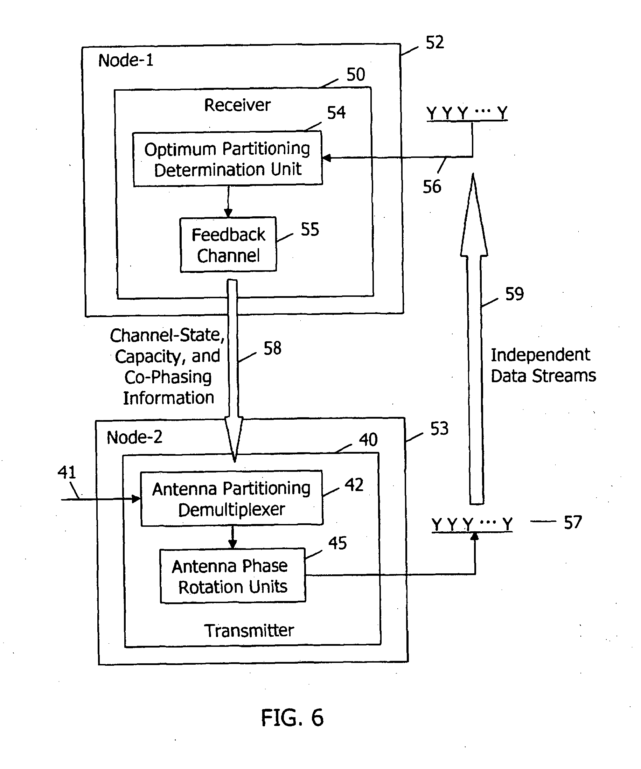

FIG. 6 is a simplified block diagram of an embodiment of the system of the present invention. The system includes the receiver 50 in a first node (Node-1) 52 and the transmitter 40 in a second node (Node-2) 53. Functionally, the receiver may include an optimum partitioning determination unit 54 and a feedback channel 55 in addition to normal receiver components. The optimum partitioning determination unit determines channel-state information for a received signal 56. The channel-state information may include partitioning information relating to an optimum partitioning of the transmit antennas 57 into K subsets. The partitioning determination unit 54 also determines the capacity of the data streams to be transmitted from each subset, and co-phasing angles for the transmit antennas in each subset. The feedback channel 55 sends this information 58 to the transmitter 40.

In the transmitter 40, an antenna partitioning demultiplexer 42 de-multiplexes the input signal 41 into K independent streams based on the antenna-partitioning information received from the receiver. Each stream may be coded and modulated at a rate which is not greater than the stream capacity. Each stream may also be scaled. The transmitter partitions the transmit antennas 57 into K subsets, and antenna phase rotation units 45 apply the co-phasing angles to each transmit antenna in accordance with the information provided by the receiver 50. The transmitter then transmits the K data streams 59 from the K subsets of antennas 57.

When comparing the complexity of Multiple Stream Co-phasing (MSC) with S-PARC, it can be concluded that the complexities are of the same order. The transmitters for the two schemes require similar complexity, with the only additional requirement for MSC being phase rotation. The receivers for the two schemes are identical. The only difference in complexity between MSC and S-PARC is in how the feedback coefficients are computed. For S-PARC, the feedback coefficients are computed by computing the capacity for all possible subsets of the set of transmit antennas and then computing the individual capacity of each stream (stream capacities) for the chosen subset. For MSC, the feedback coefficients are computed by computing the capacity for all possible partitions of the set of transmit antennas and then computing the stream capacities for the chosen partition.

The number of subsets of the set of transmit antennas (except the null set) is $2^{M-1}$. It has been found that the number of antenna set partitions for 2 x 2, 3 x 3, and 4 x 4 MIMO systems are 2, 5, and 15, respectively. For example, the partitions for a 4 x 4 system (in addition to the partitions given earlier for a 4 x 2 system) are:

A(9)={{1,2}, {3}, {4}}, A(10)={{1,3}, {2}, {4}}, A(11)={{1,4}, {2}, {3}},
A(12)={{2,3}, {1}, {4}}, A(13)={{2,4}, {1}, {3}}, A(14)={{3,4}, {1}, {2}}, and
A(15)={{1}, {2}, {3}, {4}}.

For 2 x 2, 3 x 3, and 4 x 4 MIMO systems, the number of partitions (2, 5, and 15, respectively) is less than or equal to the number of subsets (3, 7, and 15, respectively). The two schemes thus require a similar number of capacity evaluations. An additional requirement for MSC is the computation of co-phasing angles for each partition. A closed-form expression, equation (11), is used for the computation of a single co-phasing angle. An iterative algorithm is used for the computation of multiple co-phasing angles. It has been found that two iterations of the serial iterative algorithm described above provides very good estimates. Thus, the complexities of MSC and S-PARC are of the same order.

In another embodiment of the present invention, referred to as selective-MSC (S-MSC), the transmit antennas are utilized selectively as in selective-PARC (S-PARC). In S-MSC, all possible (or desirable) subsets of the set of transmit antennas are considered for transmitting input streams. The subset that achieves the highest capacity is selected. The capacity for each subset $S \subseteq \{1,2,\mathrm{K},M\}$ (except the null set) is found by partitioning the set S into all possible (or desirable) partitions (as in MSC) and evaluating the capacity for the partitions. The capacity for the set S is the maximum capacity over all partitions. S-MSC is useful at low SNR, when it may be better to not waste transmit power on an antenna that has weak signal power (below or not much higher than noise level). The receiver performs the antenna selection for S-MSC by hypothesizing each (or each desirable) subset of transmit antennas and finding the the best partition and the capacity for that subset. The subset that maximizes capacity is selected along with the partition. The receiver then signals this information to the transmitter.

In yet another embodiment, only certain (desirable) partitions are considered. For example, for a 4 x 4 MIMO system, one may consider the partitions A(1)={{1}, {2}, {3}, {4}} and A(2)={1,2,3,4} only. The first partition corresponds to sending four independent input streams on four antennas, and the second partition corresponds to sending one input stream on all four antennas after co-phasing.

Other embodiments of the present invention include: (a) using alternative methods (metrics) for generating co-phasing angles, (b) quantizing rate and/or angle information for feedback, (c) using different power scaling of the streams based on the knowledge or an estimate of antenna gain disparity, and (d) using antenna correlation information.

It has been found that MSC greatly outperforms S-PARC under many practical conditions including low SNR, correlated receive antennas, systems in which there are fewer receive antennas than transmit antennas, and Ricean fading. This is because, unlike S-PARC, MSC uses all antennas to transmit an adaptive number of data streams with co-phasing, which achieves high SNR. For a 4 x 4 MIMO system with Ricean fading (8 dB line of sight component), MSC obtains a gain of 3.8 dB over S-PARC at the rate of 3 bits per symbol. For many MIMO channels of interest, MSC gets very close to the capacity of an optimum closed-loop MIMO scheme for the entire SNR range. This is achieved with similar complexity and feedback requirements as S-PARC (which are much less than those for optimum closed-loop MIMO).

As will be recognized by those skilled in the art, the innovative concepts described in the present application can be modified and varied over a wide range of applications. Accordingly, the scope of patented subject matter should not be limited to any of the specific exemplary teachings discussed above, but is instead defined by the following claims.

## Claims

1. A method in a receiver (50) comprised in a first node (52) in communication with a transmitter (40) in a second node (53) in a radio system, wherein multiple independent data streams are transmitted from subsets of a plurality of transmit antennas (57), said method comprising:

    determining (22) for each transmit antenna, a co-phasing angle that maximizes the received signal power, said step of determining a co-phasing angle for each transmit antenna comprising:

        computing a prefilter weight matrix for each transmit antenna subset;
        computing a prefilter channel as a product of the prefilter weight matrix and a channel impulse response matrix;
        computing a trace metric of a prefilter channel autocorrelation matrix;
        maximizing the trace metric to decouple the input streams; and
        determining the co-phasing angles independently for each data stream;

    determining (28) a partitioning of the plurality of transmit antennas (57) that provides the highest channel capacity among all possible partitionings, wherein the step of determining a partitioning of the plurality of transmit antennas (57) further comprises determining the number of transmit antenna subsets, which transmit antennas are included in each subset, and the capacity of the data stream to be transmitted from each transmit antenna subset, and wherein the step of determining a partitioning of the plurality of transmit antennas (57) further comprises: hypothesizing every possible partition of the set of transmit antennas into subsets; for each antenna partitioning, determining the co-phasing angles to be applied to each transmit antenna in each subset; for each transmit antenna partitioning, determining a total channel capacity; and selecting the transmit antenna partitioning that provides the highest channel capacity; and
    providing (32) to the transmitter (40), information regarding the determined co-phasing angle for each transmit antenna, and information regarding the transmit antenna partitioning such that the transmitter can partition the plurality of transmit antennas (57) into mutually exclusive subsets in accordance with the determined partitioning information and apply (45) a relative phase rotation to each transmit antenna in each subset in accordance with the co-phasing angles.

2. The method according to claim 1, whereby every possible partition of the set of transmit antennas into subsets implies every transmit antenna subset that is supported by the transmitter.

3. The method according to claim 1, wherein the step of determining a partitioning of the plurality of transmit antennas (57) into a plurality of subsets is further **characterized by** partitioning the plurality of transmit antennas into every possible antenna subset.

4. The method according to claim 1, wherein the step of calculating a relative phase rotation for each transmit antenna in each partitioned subset is further **characterized by** utilizing an iterative algorithm to find the relative phase rotation for each transmit antenna that maximizes received signal strength at the receiver for the subset.

5. A radio receiver in a first node for communicating with a transmitter in a second node, said transmitter having a plurality of transmit antennas, said receiver comprising:

EP 1 958 347 B1

means for determining ($51_1$-$51_K$) for each transmit antenna, a co-phasing angle that maximizes the received signal power, said means for determining a co-phasing angle for each transmit antenna being adapted to:

compute a prefilter weight matrix for each transmit antenna subset;
compute a prefilter channel as a product of the prefilter weight matrix and a channel impulse response matrix;
compute a trace metric of a prefilter channel autocorrelation matrix;
maximize the trace metric to decouple the input streams; and
determine the co-phasing angles independently for each data stream;

means for determining ($51_1$-$51_K$) a partitioning of the plurality of transmit antennas that provides the highest channel capacity among all possible partitionings, wherein the means for determining the partitioning is adapted to determine the number of transmit antenna subsets, which transmit antennas are included in each subset, and the capacity of the data stream to be transmitted from each transmit antenna subset, and wherein the means for determining a partitioning of the plurality of transmit antennas further comprises: means for determining a stream capacity for every possible transmit antenna subset; means for determining a total channel capacity for each transmit antenna partitioning; and means for selecting the transmit antenna partitioning that provides the highest channel capacity; and
means for selecting a subset having the highest stream capacity; and
means for sending to the transmitter, information regarding the determined co-phasing angle for each transmit antenna and the determined partitioning, such that the transmitter can apply (45) a relative phase rotation to each transmit antenna in each subset in accordance with the co-phasing angles.

6. The radio receiver according to claim 5, whereby every possible transmit antenna subset implies every transmit antenna subset that is supported by the transmitter.

7. A radio system comprising a receiver (50) according to claim 5 in a first node (52), a transmitter (40) in a second node (53) in communication with the first node, and a plurality of transmit antennas (57), said transmitter transmitting multiple independent data streams from subsets of the plurality of transmit antennas, said transmitter being a radio transmitter (40) in a second node (53) for communicating with said receiver (50), said transmitter having said plurality of transmit antennas (57), wherein the transmitter comprises

means for receiving from the receiver, information regarding a determined a co-phasing angle for each transmit antenna that maximizes the received signal power, said determined co-phasing angle for each transmit antenna comprising: a prefilter weight matrix for each transmit antenna subset having been computed; a prefilter channel as a product of the prefilter weight matrix and a channel impulse response matrix having been computed; a trace metric of a prefilter channel autocorrelation matrix having been computed; the trace metric having been maximized to decouple the input streams; and the co-phasing angles having been determined independently for each data stream, and information regarding a partitioning of the plurality of transmit antennas (57) into subsets determined by the receiver after determining the co-phasing angles, the determined partitioning providing the highest channel capacity among all possible partitionings, said determined partitioning further comprising the number of transmit antenna subsets having been determined, which transmit antennas are included in each subset having been determined, and the capacity of the data stream to be transmitted from each transmit antenna subset having been determined, and wherein said determined partitioning of the plurality of transmit antennas (57) further comprises: every possible partition of the set of transmit antennas having been hypothesized into subsets; for each antenna partitioning, the co-phasing angles to be applied to each transmit antenna in each subset having been determined; for each transmit antenna partitioning, a total channel capacity having been determined; and the transmit antenna partitioning that provides the highest channel capacity having been selected;
means for partitioning (42) the plurality of transmit antennas into mutually exclusive subsets in accordance with the determined partitioning information;
means for applying (45) a relative phase rotation to each transmit antenna in each subset in accordance with the co-phasing angles received from the receiver; and
means for transmitting an independent data stream from each partitioned subset of transmit antennas.

**Patentansprüche**

1. Verfahren in einem Empfänger (50), in einem ersten Knoten (52) enthalten, der in Kommunikation mit einem Sender (40) in einem zweiten Knoten (53) in einem Funksystem steht, worin mehrfache unabhängige Datenströme von Teilmengen einer Vielzahl von Sendeantennen (57) übertragen werden, wobei das Verfahren umfasst:

für jede Sendeantenne das Bestimmen (22) eines gleichphasigen Winkels, der die empfangene Signalleistung maximiert, wobei der Schritt des Bestimmens eines gleichphasigen Winkels für jede Sendeantenne umfasst:

Berechnen einer Vorfilter-Gewichtsmatrix für jede Sendeantennen-Teilmenge;
Berechnen eines Vorfilterkanals als ein Produkt der Vorfilter-Gewichtsmatrix und einer Kanalimpuls-Antwortmatrix;
Berechnen einer Spurmetrik einer Vorfilter-Kanalautokorrelationsmatrix;
Maximieren der Spurmetrik, um die Eingangsströme zu entkoppeln; und
unabhängige Bestimmung der gleichphasigen Winkel für jeden Datenstrom;
Bestimmen (28) einer Partitionierung der Vielzahl von Sendeantennen (57), die die höchste Kanalkapazität unter allen möglichen Partitionierungen bereitstellt, worin der Schritt des Bestimmens einer Partitionierung der Vielzahl von Sendeantennen (57) außerdem umfasst, dass die Anzahl von Sendeantennen-Teilmengen, welche Sendeantennen in jeder Teilmenge eingeschlossen sind, und die Kapazität des Datenstroms bestimmt werden, der von jeder Sendeantennen-Teilmenge zu übertragen ist, und worin der Schritt des Bestimmens einer Partitionierung der Vielzahl von Sendeantennen (57) außerdem umfasst: Hypothetisieren jeder möglichen Partition der Menge von Sendeantennen in Teilmengen; für jede Antennenpartitionierung die gleichphasigen Winkel bestimmen, die auf jede Sendeantenne in jeder Teilmenge anzuwenden sind; für jede Sendeantennenpartitionierung eine Gesamtkanalkapazität bestimmen; und die Sendeantennenpartitionierung auswählen, die die höchste Kanalkapazität bereitstellt; und
dem Sender (40) Information bereitstellen (32), die den bestimmten gleichphasigen Winkel für jede Sendeantenne betrifft, und Information, die die Sendeantennenpartitionierung betrifft, sodass der Sender die Vielzahl von Sendeantennen (57) gemäß der bestimmten Partitionierungsinformation in sich wechselseitig ausschließende Teilmengen partitionieren kann und eine relative Phasendrehung gemäß den gleichphasigen Winkeln auf jede Sendeantenne in jeder Teilmenge anwenden kann (45).

2. Verfahren nach Anspruch 1, wodurch jede mögliche Partition der Menge von Sendeantennen in Teilmengen jede Sendeantennen-Teilmenge impliziert, die vom Sender unterstützt wird.

3. Verfahren nach Anspruch 1, worin der Schritt des Bestimmens einer Partitionierung der Vielzahl von Sendeantennen (57) in eine Vielzahl von Teilmengen außerdem **gekennzeichnet ist durch** Partitionierung der Vielzahl von Sendeantennen in jede mögliche Antennenteilmenge.

4. Verfahren nach Anspruch 1, worin der Schritt des Berechnens einer relativen Phasendrehung für jede Sendeantenne in jeder partitionierten Teilmenge außerdem **gekennzeichnet ist durch** Nutzen eines iterativen Algorithmus, um die relative Phasendrehung für jede Sendeantenne zu finden, die die empfangene Signalleistung am Empfänger für die Teilmenge maximiert.

5. Funkempfänger in einem ersten Knoten zum Kommunizieren mit einem Sender in einem zweiten Knoten, wobei der Sender eine Vielzahl von Sendeantenne hat, wobei der Empfänger Folgendes umfasst:

ein Mittel, um für jede Sendeantenne einen gleichphasigen Winkel zu bestimmen ($51_1$-$51_K$), der die empfangene Signalleistung maximiert, wobei das Mittel zum Bestimmen eines gleichphasigen Winkels für jede Sendeantenne angepasst ist zum:

Berechnen einer Vorfilter-Gewichtsmatrix für jede Sendeantennen-Teilmenge;
Berechnen eines Vorfilterkanals als ein Produkt der Vorfilter-Gewichtsmatrix und einer Kanalimpuls-Antwortmatrix;
Berechnen einer Spurmetrik einer Vorfilter-Kanalautokorrelationsmatrix;
Maximieren der Spurmetrik, um die Eingangsströme zu entkoppeln; und
unabhängige Bestimmung der gleichphasigen Winkel für jeden Datenstrom;
ein Mittel zum Bestimmen ($51_1$-$51_K$) einer Partitionierung der Vielzahl von Sendeantennen, die die höchste Kanalkapazität unter allen möglichen Partitionierungen bereitstellt, worin das Mittel zum Bestimmen der Partitionierung dazu angepasst ist, die Anzahl von Sendeantennen-Teilmengen, welche Sendeantennen in jeder Teilmenge eingeschlossen sind, und die Kapazität des Datenstroms zu bestimmen, der von jeder Sendeantennen-Teilmenge zu übertragen ist, und worin das Mittel zum Bestimmen einer Partitionierung der Vielzahl von Sendeantennen außerdem umfasst: ein Mittel, um eine Stromkapazität für jede mögliche Sendeantennen-Teilmenge zu bestimmen; ein Mittel zum Bestimmen einer Gesamtkanalkapazität für jede Sendeantennenpartitionierung; und ein Mittel zum Auswählen der Sendeantennenpartitionierung, die die höchste Kanalkapazität bereitstellt; und

ein Mittel zum Auswählen einer Teilmenge mit der höchsten Stromkapazität; und

ein Mittel, um dem Sender Information zu senden, die den bestimmten gleichphasigen Winkel für jede Sendeantenne und die bestimmte Partitionierung betrifft, sodass der Sender eine relative Phasendrehung gemäß den gleichphasigen Winkeln auf jede Sendeantenne in jeder Teilmenge anwenden kann (45).

6. Funkempfänger nach Anspruch 5, wodurch jede mögliche Sendeantennen-Teilmenge jede Sendeantennen-Teilmenge impliziert, die durch den Sender unterstützt wird.

7. Funksystem, Folgendes umfassend: einen Empfänger (50) nach Anspruch 5 in einem ersten Knoten (52), einen Sender (40) in einem zweiten Knoten (53) in Kommunikation mit dem ersten Knoten und eine Vielzahl von Sendeantennen (57), wobei der Sender mehrfache unabhängige Datenströme von Teilmengen der Vielzahl von Sendeantennen überträgt, wobei der Sender ein Funksender (40) in einem zweiten Knoten (53) zum Kommunizieren mit dem Empfänger (50) ist, wobei der Sender die Vielzahl von Sendeantennen (57) hat, worin der Sender umfasst:

ein Mittel, um vom Empfänger Information zu empfangen, die einen bestimmten gleichphasigen Winkel für jede Sendeantenne betrifft, der die empfangene Signalleistung maximiert, wobei der bestimmte gleichphasige Winkel für jede Sendeantenne umfasst: eine Vorfilter-Gewichtsmatrix wurde für jede Sendeantennen-Teilmenge berechnet; ein Vorfilterkanal wurde als ein Produkt der Vorfilter-Gewichtsmatrix und einer Kanalimpuls-Antwortmatrix berechnet; eine Spurmetrik einer Vorfilter-Kanalautokorrelationsmatrix wurde berechnet; die Spurmetrik wurde maximiert, um die Eingangsströme zu entkoppeln; und die gleichphasigen Winkel wurden für jeden Datenstrom unabhängig berechnet, und Information, die eine Partitionierung der Vielzahl von Sendeantennen (57) in Teilmengen betrifft, vom Empfänger nach dem Bestimmen der gleichphasigen Winkel wurde bestimmt, wobei die bestimmte Partitionierung die höchste Kanalkapazität unter allen möglichen Partitionierungen bereitstellt, wobei die bestimmte Partitionierung außerdem umfasst: die Anzahl von Sendeantennen-Teilmengen wurde bestimmt, welche Sendeantennen in jeder Teilmenge eingeschlossen sind, die bestimmt wurde, und die Kapazität des Datenstroms, der von jeder Sendeantennen-Teilmenge zu übertragen ist, wurde bestimmt, und worin die bestimmte Partitionierung der Vielzahl von Sendeantennen (57) außerdem umfasst: jede mögliche Partition der Menge von Sendeantennen wurde in Teilmengen hypothetisiert; für jede Antennenpartitionierung wurden die gleichphasigen Winkel bestimmt, die auf jede Sendeantenne in jeder bestimmten Teilmenge anzuwenden sind; für jede Sendeantennenpartitionierung wurde eine Gesamtkanalkapazität bestimmt; und die Sendeantennenpartitionierung wurde ausgewählt, die die höchste Kanalkapazität bereitstellt;

ein Mittel zum Partitionieren (42) der Vielzahl von Sendeantennen in sich wechselseitig ausschließende Teilmengen gemäß der bestimmten Partitionierungsinformation;

ein Mittel zum Anwenden (45) einer relativen Phasendrehung auf jede Sendeantenne in jeder Teilmenge gemäß den vom Empfänger empfangenen gleichphasigen Winkeln; und

ein Mittel zum Übertragen eines unabhängigen Datenstroms von jeder partitionierten Teilmenge von Sendeantennen.

## Revendications

1. Procédé, mis en oeuvre dans un récepteur (50) inclus dans un premier noeud (52) en communication avec un émetteur (40) dans un second noeud (53) au sein d'un système radio, dans lequel de multiples trains de données indépendants sont transmis à partir de sous-ensembles d'une pluralité d'antennes de transmission (57), ledit procédé comprenant les étapes ci-dessous consistant à :

déterminer (22), pour chaque antenne de transmission, un angle de cophasage qui maximise la puissance du signal reçu, ladite étape de détermination d'un angle de cophasage pour chaque antenne de transmission consistant à :

calculer une matrice de pondération de préfiltre pour chaque sous-ensemble d'antennes de transmission ;
calculer un canal de préfiltre sous la forme d'un produit de la matrice de pondération de préfiltre et d'une matrice de réponse impulsionnelle de canal ;
calculer une métrique de trace d'une matrice d'autocorrélation de canal de préfiltre ;

maximiser la métrique de trace en vue de découpler les trains d'entrée ; et

déterminer les angles de cophasage indépendamment pour chaque train de données ;

déterminer (28) un partitionnement de la pluralité d'antennes de transmission (57) qui fournit la capacité de canal la plus élevée parmi la totalité des partitionnements possibles, dans lequel l'étape de détermination d'un partitionnement de la pluralité d'antennes de transmission (57) consiste en outre à déterminer le nombre de sous-ensembles d'antennes de transmission, lesquelles antennes de transmission sont incluses dans chaque sous-ensemble, et la capacité des train de données à être transmis à partir de chaque sous-ensemble d'antennes de transmission, et dans lequel l'étape de détermination d'un partitionnement de la pluralité d'antennes de transmission (57) consiste en outre à : estimer par hypothèse chaque partition possible de l'ensemble d'antennes de transmission en sous-ensembles ; pour chaque partitionnement d'antenne, déterminer les angles de cophasage à appliquer à chaque antenne de transmission dans chaque sous-ensemble ; pour chaque partitionnement d'antenne de transmission, déterminer une capacité de canal totale ; et sélectionner le partitionnement d'antenne de transmission qui fournit la capacité de canal la plus élevée ; et

fournir (32), à l'émetteur (40), des informations connexes à l'angle de cophasage déterminé pour chaque antenne de transmission, et des informations connexes au partitionnement d'antenne de transmission, de sorte que l'émetteur peut partitionner la pluralité d'antennes de transmission (57) en des sous-ensembles mutuellement exclusifs selon les informations de partitionnement déterminées, et appliquer (45) une rotation de phase relative à chaque antenne de transmission dans chaque sous-ensemble selon les angles de cophasage.

2. Procédé selon la revendication 1, moyennant quoi chaque partition possible de l'ensemble d'antennes de transmission en sous-ensembles implique chaque sous-ensemble d'antennes de transmission qui est pris en charge par l'émetteur.

3. Procédé selon la revendication 1, dans lequel l'étape de détermination d'un partitionnement de la pluralité d'antennes de transmission (57) en une pluralité de sous-ensembles est en outre **caractérisée par** le partitionnement de la pluralité d'antennes de transmission en chaque sous-ensemble d'antennes possible.

4. Procédé selon la revendication 1, dans lequel l'étape de calcul d'une rotation de phase relative pour chaque antenne de transmission dans chaque sous-ensemble partitionné est en outre **caractérisée par** l'utilisation d'un algorithme itératif pour trouver la rotation de phase relative pour chaque antenne de transmission qui maximise l'intensité du signal reçu au niveau du récepteur pour le sous-ensemble.

5. Récepteur radio dans un premier noeud destiné à communiquer avec un émetteur dans un second noeud, ledit émetteur présentant une pluralité d'antennes de transmission, ledit récepteur comprenant :

un moyen pour déterminer ($51_1$-$51_K$), pour chaque antenne de transmission, un angle de cophasage qui maximise la puissance du signal reçu, ledit moyen pour déterminer un angle de cophasage pour chaque antenne de transmission étant apte à :

calculer une matrice de pondération de préfiltre pour chaque sous-ensemble d'antennes de transmission ;

calculer un canal de préfiltre sous la forme d'un produit de la matrice de pondération de préfiltre et d'une matrice de réponse impulsionnelle de canal ;

calculer une métrique de trace d'une matrice d'autocorrélation de canal de préfiltre ;

maximiser la métrique de trace en vue de découpler les trains d'entrée ; et

déterminer les angles de cophasage indépendamment pour chaque train de données ;

un moyen pour déterminer ($51_1$-$51_K$) un partitionnement de la pluralité d'antennes de transmission qui fournit la capacité de canal la plus élevée parmi la totalité des partitionnements possibles, dans lequel le moyen pour déterminer le partitionnement est apte à déterminer le nombre de sous-ensembles d'antennes de transmission, lesquelles antennes de transmission sont incluses dans chaque sous-ensemble, et la capacité des trains de données à être transmis à partir de chaque sous-ensemble d'antennes de transmission, et dans lequel le moyen pour déterminer un partitionnement de la pluralité d'antennes de transmission comporte en outre : un moyen pour déterminer une capacité de trains pour chaque sous-ensemble d'antennes de transmission possible ; un moyen pour déterminer une capacité de canal totale pour chaque partitionnement d'antenne de transmission ; et un moyen pour sélectionner le partitionnement d'antenne de transmission qui fournit la capacité de canal la plus élevée ; et

un moyen pour sélectionner un sous-ensemble présentant la capacité de trains la plus élevée ; et

un moyen pour envoyer, à l'émetteur, des informations connexes à l'angle de cophasage déterminé pour chaque antenne de transmission et au partitionnement déterminé, de sorte que l'émetteur peut appliquer (45) une rotation de phase relative à chaque antenne de transmission dans chaque sous-ensemble selon les angles de cophasage.

**6.** Récepteur radio selon la revendication 5, moyennant quoi chaque sous-ensemble d'antennes de transmission possible implique chaque sous-ensemble d'antennes de transmission qui est pris en charge par l'émetteur.

**7.** Système radio comprenant un récepteur (50) selon la revendication 5, dans un premier noeud (52), un émetteur (40) dans un second noeud (53) en communication avec le premier noeud, et une pluralité d'antennes de transmission (57), ledit émetteur transmettant de multiples trains de données indépendants à partir de sous-ensembles de la pluralité d'antennes de transmission, ledit émetteur étant un émetteur radio (40) dans un second noeud (53) destiné à communiquer avec ledit récepteur (50), ledit émetteur présentant ladite pluralité d'antennes de transmission (57), dans lequel l'émetteur comprend :

un moyen pour recevoir, à partir du récepteur, des informations connexes à un angle de cophasage déterminé pour chaque antenne de transmission qui maximise la puissance du signal reçu, ledit angle de cophasage déterminé pour chaque antenne de transmission comprenant : le calcul d'une matrice de pondération de préfiltre pour chaque sous-ensemble d'antennes de transmission ; le calcul d'un canal de préfiltre sous la forme d'un produit de la matrice de pondération de préfiltre et d'une matrice de réponse impulsionnelle de canal ; le calcul d'une métrique de trace d'une matrice d'autocorrélation de canal de préfiltre ; la maximisation de la métrique de trace en vue de découpler les trains d'entrée ; et la détermination des angles de cophasage de façon indépendante pour chaque train de données, et des informations connexes à un partitionnement de la pluralité d'antennes de transmission (57) en des sous-ensembles déterminés par le récepteur suite à la détermination des angles de cophasage, le partitionnement déterminé fournissant la capacité de canal la plus élevée parmi la totalité des partitionnements possibles, ledit partitionnement déterminé comprenant en outre la détermination du nombre de sous-ensembles d'antennes de transmission, lesquelles antennes de transmission sont incluses dans chaque sous-ensemble déterminé, et la détermination de la capacité des trains de données à transmettre à partir de chaque sous-ensemble d'antennes de transmission, et dans lequel ledit partitionnement déterminé de la pluralité d'antennes de transmission (57) comprend en outre : l'estimation par hypothèse de chaque partition possible de l'ensemble d'antennes de transmission en sous-ensembles ; pour chaque partitionnement d'antenne, la détermination des angles de cophasage à appliquer à chaque antenne de transmission dans chaque sous-ensemble ; pour chaque partitionnement d'antenne de transmission, la détermination d'une capacité de canal totale ; et la sélection du partitionnement d'antenne de transmission qui fournit la capacité de canal la plus élevée ;
un moyen pour partitionner (42) la pluralité d'antennes de transmission en des sous-ensembles mutuellement exclusifs selon les informations de partitionnement déterminées ;
un moyen pour appliquer (45) une rotation de phase relative à chaque antenne de transmission dans chaque sous-ensemble selon les angles de cophasage reçus à partir du récepteur ; et
un moyen pour transmettre un train de données indépendant à partir de chaque sous-ensemble partitionné d'antennes de transmission.

Receiver determines channel-state information including optimum antenna partitioning into $K$ subsets, capacity of data streams to be transmitted from each subset, and co-phasing angles for antennas in each subset — 11

Receiver sends channel-state information to transmitter — 12

Transmitter de-multiplexes input signal into $K$ streams, which are coded/modulated at rates not greater than the corresponding stream capacities — 13

Transmitter partitions antennas into $K$ subsets in accordance with channel-state information — 14

Transmitter transmits the $K$ data streams from the corresponding subsets of antennas after co-phasing — 15

FIG. 1

For partition $n$ ($n$ = 1 to $J$)
$A(n) = \{a_1(n),\ a_2(n),...a_K(n)\}$ — 21

Find co-phasing angles
$\hat{\theta}_m^k (n),\ k = 1,2,K\ ,K,\ m \in a_k (n)$ — 22

Compute prefilter
$W(n)$ — 23

Compute prefiltered channel
$G(n)$ — 24

Compute channel capacity
$C(n)$ — 25

No ← $n = J?$ — 26

Iterate $n = n + 1$ — 27

Yes

Find best partition
$\hat{n} = \arg\ \max\ C(n)$ — 28

— 29

Yes ← $\hat{K} = 1?$ → No

30

Stream capacity

$C_1(\hat{n}) = C(\hat{n})$

31

Find stream capacity
$C_k(\hat{n}),\ k = 1,2,K\ \hat{K}$

FIG. 2

Feedback channel-state
information to transmitter — 32

For the $n$-th partition ($n = 1$ to $J$)
$A(n) = \{a_1(n), a_2(n), ... a_K(n)\}$ — 210

For the $k$-th stream ($k = K, K-1, ..., 1$) — 220

Find co-phasing angles
$\hat{\theta}_m^k(n), m \in a_k(n)$ — 230

Compute stream capacity
$\hat{C}_k(n)$ — 240

260 — Iterate $k = k - 1$

No

$k = 1$ ? — 250

Yes

Compute total capacity
$\hat{C}(n) = \sum_{k=1}^{K} \hat{C}_k(n)$ — 270

280

$n = J$ ? — No — Iterate $n = n + 1$ — 290

Yes

Find best partition
$\hat{n} = \arg\max \hat{C}(n)$ — 300

Feedback channel-state
information to transmitter — 310

FIG. 2B

Receive instantaneous channel-state
information from receiver — 34

Partition antennas into *K* subsets — 35

De-multiplex input signal into
*K* independent data streams — 36

Code, modulate, and scale
each data stream — 37

Apply co-phasing information
to antennas in each subset — 38

Transmit data streams through
the corresponding antenna subsets — 39

FIG. 3

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1359683 A